# EUROPEAN PATENT SPECIFICATION

(11) **EP 2 949 967 B1**
(45) Date of publication and mention of the grant of the patent: **06.05.2020**
(21) Application number: 14170471.8
(22) Date of filing: 29.05.2014
(51) Int. Cl.: F16H 19/02, F16C 29/06, F16D 41/08, F16H 35/10

(54) **Mechanism for reciprocating linear motion for a medical device**
Vorrichtung für die lineare Hin- und Herbewegung für eine medizinischen Vorrichtung
Mécanisme pour un mouvement linéaire alternatif pour un dispositif médical

(43) Date of publication of application: 02.12.2015
(73) Proprietor: Fundacja Rozwoju Kardiochirurgii Im. Prof. Zbigniewa Religi, 41-800 Zabrze (PL)
(72) Inventor: Nawrat, Zbigniew, 41-800 Zabrze (PL); Mucha, Lukasz, 37-700 Przemysl (PL); Lehrich, Krzysztof, 43-450 Ustron (PL); Lis, Krzysztof, 42-674 Wilkowice (PL)
(74) Representative: Malcherek, Piotr

(56) References cited:
- EP-A1- 0 213 291
- GB-A- 2 006 387
- GB-A- 2 364 760
- US-A- 3 475 972
- US-A- 3 777 578

## Description

### Object of the invention

The present invention relates to a mechanism for reciprocating linear motion for a medical device, wherein rotary motion is converted into reciprocating motion applied in particular in surgical devices.

### State of the art

The patent description US 5735174 discloses a mechanism for reciprocating linear motion, wherein a threaded screw and a nut are used, and the construction of said nut is characteristic for this invention. Said mechanism is based on a rolling guide and geometric variants thereof.

The patent description US 2009/0071271 A1 discloses a mechanism for converting rotary motion into reciprocating motion used for lifting table tops. Said mechanism uses a spindle and a chain whose motion results in linear movement of a working element along a guide.

The patent description US 2001/0003924 A1 also discloses a mechanism for converting rotary motion into reciprocating motion by means of a tension member drive.

A similar solution is disclosed in GB 2158177A. The presented mechanism comprises a tension member wound on a drum, wherein said tension member is wound from one side, and unwound from the other side by which reciprocating motion of a working element is realized.

The closest prior art is US 3 777 578 which discloses a reciprocating linear motion mechanism, comprising a rotatable shaft driven with a drive unit and a guide with a slidably carriage mounted thereon. The rotatably shaft has a smooth external surface and is connected with a shaft of the drive unit by means of an intermediate mechanism. The carriage is integrated with a transport mechanism which is mounted on the rotatable shaft and comprises rolling elements so arranged that points of contact of said rolling elements with the smooth surface of the shaft determine a helix.

GB 2 006 387 A, US 3 475 972 and GB 2 364 760 show also similar reciprocating linear motion mechanisms, utilized in multiple applications.

Most solutions known from the state of the art do not include an intrinsic protection against system overload, which means that it is not possible to achieve reciprocating motion by applying external force without damaging the mechanism.

### Aim of the invention

The aim of the present invention is to provide a self-braking mechanism for reciprocating linear motion which is equipped with an overload protection system.

Another aim of the invention is to provide a mechanism for reciprocating linear motion of a compact structure, reliable and ensuring safe use for patients.

### Essence of the invention

The present invention has been presented in claim 1 and concerns a mechanism for reciprocating linear motion of a medical device. Said mechanism has a body, wherein are mounted: a rotatable shaft driven by a drive unit and a guide with a platform slidably mounted thereon. Said rotatable shaft has a smooth external surface and is connected with a shaft of the drive unit by means of an intermediate mechanism comprising at least two unidirectional clutches oppositely oriented on the smooth, rotatable shaft. Said platform is integrated with the transport mechanism mounted on the rotatable shaft and comprises rolling elements so arranged that points of contact of said rolling elements with the smooth surface of the shaft determine a helix. The drive unit and the intermediate mechanism are mounted to the platform.

Furthermore, the intermediate mechanism is preferably mounted on the platform by means of a bearing and has a form of a belt transmission. In further preferable embodiments each unidirectional clutch comprises rolling elements each of which is mounted on a respective recess with a wedge-shaped edge made in the body of the clutch or directly in the intermediate mechanism and is supported by a spring element. Additionally the transport mechanism has a form of two releasable blocks mounted on the shaft, wherein rolling elements are mounted and said blocks are connected by means of set screws. The platform is slidingly mounted on the guide with the use of sliding or rolling guide shoes.

The mechanism for reciprocating motion of a medical device is self-braking and has a sliding overload protection system, owing to which in the event of a breakdown its parts are not damaged. Furthermore, thanks to arranging the drive unit on the platform, the mechanism is reliable and has a compact structure.

### Description of the drawings

The invention is presented in greater detail in the enclosed drawing, where fig. 1 is a perspective view of an example mechanism, fig. 2 - a partial cross-sectional view of the intermediate mechanism and the platform of said mechanism, fig. 3 - a cross-sectional view of the unidirectional clutch, fig. 4 - a perspective view of the transport mechanism mounted on the smooth shaft, fig. 5 - a schematic longitudinal sectional view of the mechanism in another embodiment, fig. 6 and fig. 7 - a schematic sectional view of the opposite unidirectional clutches, fig. 8 and fig. 9 - the mechanism mounted on the base of a medical device with its body in different positions, fig. 10 and fig. 11 - the mechanism mounted on the base of a medical device with its platform in different positions.

### Embodiments

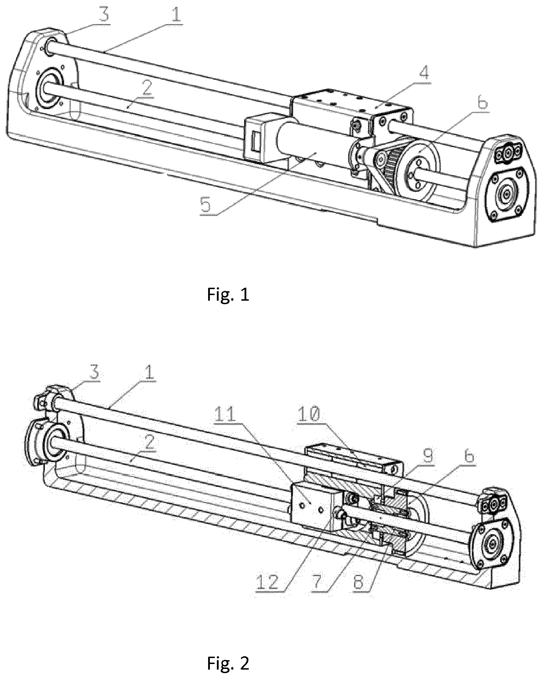

The first embodiment presented in figures 1 to 4 one can see the mechanism for reciprocating linear motion of a medical device, for example a surgical device. In order to present the solution clearly in a drawing neither the base onto which the mechanism is mounted, nor the surgical or medical tool set mounted on the movable part of the mechanism have been shown. The mechanism for reciprocating linear motion comprises a body 3, wherein a guide 1 and a rotatable shaft 2 parallel to said guide are mounted, and the external surface of said shaft is smooth, which means it has neither an external thread nor other guiding elements. The shaft 2 can be a rotatable rod or a rotatable pipe hollow inside. On the rotatable shaft 2 and on the guide 3 there is a platform 4 movable in relation to said shaft 2 and to said guide 3. The platform 4 can be used for mounting thereon a medical or surgical tool set. The platform 4 is slidingly mounted on the guide 1, for example by means of sliding guide shoes 10. Furthermore, in said embodiment to the platform 4 a drive unit is mounted in the form of a rotatable motor 5. A drive shaft of the motor 5 is connected with the rotatable shaft 2 by means of an intermediate mechanism 6. In this particular case the intermediate mechanism 6 is a belt transmission. At the same time the intermediate mechanism 6 is integrated with the platform 4 and is mounted therein by means of a bearing 9. Within the internal part of the intermediate mechanism 6 there are also two oppositely oriented unidirectional clutches 7 and 8. An embodiment of said clutches shall be hereby described. Moreover, the platform 4 is mounted on the rotatable shaft 2 by means of a transport mechanism 11 mounted on the smooth shaft and comprising rolling elements 12 so arranged that points of contact of said rolling elements with the smooth surface of the shaft determine the outline of the helix. As a result of rotation of the shaft 2 said rolling elements enable the platform 4 to move along the guide 1.

Each of the oppositely oriented unidirectional clutches 7, 8 in the described embodiment comprises rolling elements 13, for example in the form of balls, each of which is mounted in a respective recess made in the body (ring) of the clutch non-slidably mounted in the intermediate mechanism 6 or made directly in the intermediate mechanism 6 and supported by a spring element 14. Said recesses also comprise a wedge-shaped edge 15. It is also possible to use unidirectional clutches constructed differently.

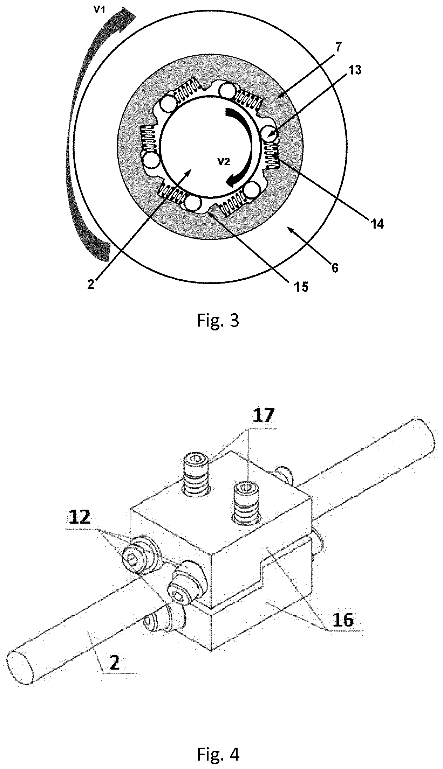

Fig. 4 shows a detailed view of the transport mechanism 11 which comprises two releasable blocks 16 mounted on the shaft 2 and connected by means of set screws 17. Within the blocks 16 there are the rolling elements 12, arranged at an angle and tangentially in relation to the external surface of the shaft 2.

Rotary motion of the motor 5 permanently fixed to the platform 4 is transferred onto the intermediate mechanism 6. In the internal part of the intermediate mechanism 6 there are oppositely oriented unidirectional clutches 7 and 8 which enable transferring drive onto the rotatable shaft 2 causing rotary motion thereof. The rolling elements 13 are arranged between the external ring of the clutch and the rotatable shaft 2. The unidirectional clutch 7, 8 is permanently connected with the intermediate mechanism 6 in such a way that said elements cannot move in relation to one another. The internal construction of the clutch enables free rotation of the drive shaft in direction V2 in fig. 3. Rotation of the intermediate mechanism 6 in direction V1 results in a simultaneous rotation of the clutch in the same direction. The rolling elements 13 move towards the wedge-shaped edge 15 thus increasing their pressure on the shaft 2. Wedge-shaped, frictional connection of said elements, which means the ring of the clutch and the shaft by means of a rolling element results in lock-up of the mechanism and transferring the torque from the intermediate mechanism 6 onto the rotatable shaft 2 leading to its rotation in direction V2. Change in the rotational direction of the intermediate mechanism 6 - opposite to VI, causes that rolling elements move towards the spring elements 14 thus unlocking the mechanism. Using two oppositely oriented unidirectional clutches results in continuous lock-up of the mechanism, which enables transferring the rotary motion from the intermediate mechanism 6 onto the shaft 2 simultaneously causing rotary motion both in direction V2 and in the opposite direction. The rolling elements 13 are made in such a way that they enable reciprocating motion of the elements of the clutches 7,8 along the shaft 2 by/thus enabling longitudinal sliding of the rolling elements on the external, smooth surface of the shaft 2 without unlocking the mechanism.

The intermediate mechanism 6 is rotatably mounted by means of the bearing 9 within the movable platform 4. This solution ensures the rotation of the intermediate mechanism 6 around its axis. Inside the platform 4 there is also the transport mechanism 11 and a set of rolling elements 12 so arranged that their points of contact with the shaft determine the helix on the external surface of the rotatable shaft 2. Owing to this it is possible to convert the rotary motion of the shaft into rectilinear motion of the slidable platform 4 by using friction between the rolling elements 12 and the shaft 2. Additionally such a solution protects the mechanism from force overload. Stopping of the slidable platform 4 with active drive results in sliding of the transport mechanism 11 on the shaft 2. The value of the sliding is regulated by the pressure of the rolling elements 12 on the external surface of the shaft 2 by means of screws 17 connecting both blocks 16.

Thus ends of the rotatable shaft 2 are mounted in bearings in the body 3. In said body 3 is also mounted the guide 1 on which with the use of sliding guide shoes 10 the platform 4 moves. Rolling guide shoes can also be used as guide shoes 10. Rotary motion of the motor 5 shaft transferred by means of the intermediate mechanism 6 and unidirectional clutches 7, 8 results in the rotatable shaft 2 rotating around its axis. The platform 4 moves on the guide 1 and along the axis of the shaft 2 in both directions, depending on the direction of rotation of the shaft 2. This configuration enables converting rotary motion of the motor 5 into linear motion of the platform 4 with simultaneous movement of the drive unit with the platform.

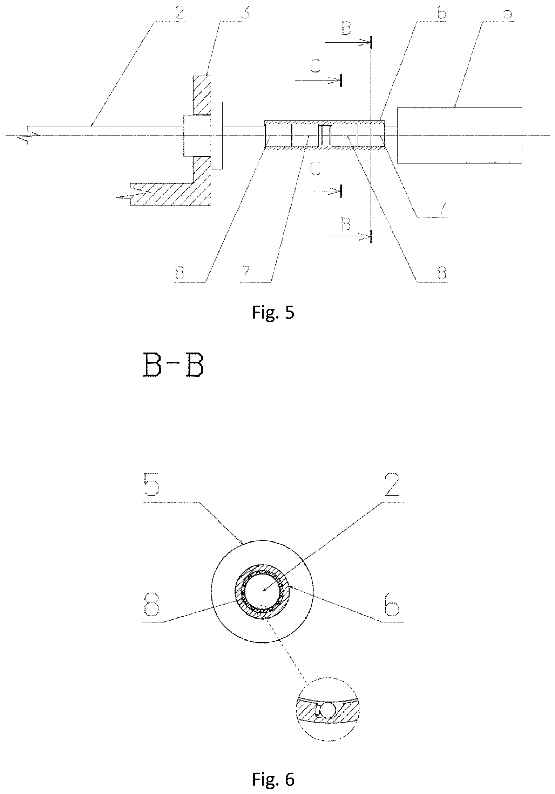

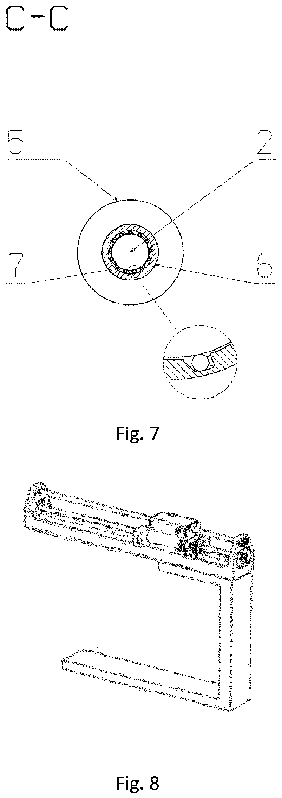

Fig. 5 shows another embodiment of the mechanism. The difference is that in this embodiment the drive unit 5 and the intermediate mechanism 6 do not constitute a part of the platform 4, but are located outside said platform. In this embodiment the intermediate mechanism 6 is a sleeve and comprises two sets of oppositely oriented unidirectional clutches 7 and 8. Construction of said clutches 7 and 8 is shown in fig. 6 and fig. 7. This embodiment is provided for information purpose only and does not constitute a part of the claimed invention.

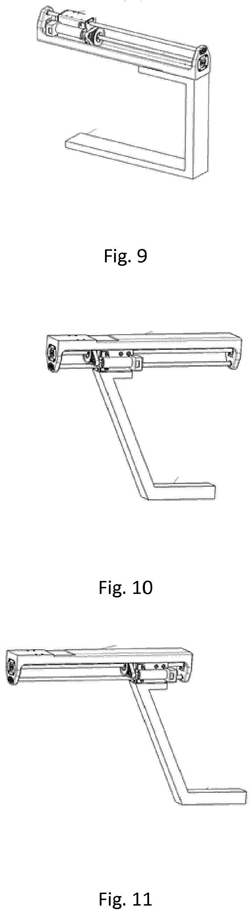

The mechanism according to the invention can be mounted to the base/ body of a medical device in two ways. It is possible to mount it with the body thereof - fig. 8 and fig. 9 show this configuration in extreme positions of the movable platform to which a surgical tool set can be mounted. In another configuration the mechanism for reciprocating linear motion of a medical device can be mounted to the base of said device with the use of the platform, which is shown in extreme positions in fig. 10 and fig. 11. In this case the surgical tool set is mounted to the body of the mechanism.

The hereby described overload protection makes it possible to change the position of the platform 4 by moving it along the guide 1 by means of an additional transport mechanism or by using human force, which is important for safety reasons in case of medical devices.

Checking the position of the platform 4 within the body 3 is possible when a linear encoder is used, which linear encoder in a preferred embodiment can be the guide 1 or be an integral part thereof.

## Claims

1. Reciprocating linear motion mechanism for a medical device, comprising a body (3), wherein are mounted a rotatable shaft (2) driven with a drive unit (5) and a guide (1) with a slidably platform (4) mounted thereon, **characterised in that** the rotatably shaft (2) has a smooth external surface and is connected with a shaft of the drive unit (5) by means of an intermediate mechanism (6) comprising at least two unidirectional clutches (7, 8) mounted on the smooth rotatably shaft (2) in opposite directions, and the platform (4) is integrated with a transport mechanism (11) which is mounted on the rotatable shaft (2) and comprises rolling elements (12) so arranged that points of contact of said rolling elements (12) with the smooth surface of the shaft (2) determine a helix, wherein the drive unit (5) and the intermediate mechanism (6) are mounted to the platform (4).

2. The mechanism according to claim 1 **characterised in that** the intermediate mechanism (6) is mounted on the platform (4) by means of a bearing (9).

3. The mechanism according to claim 1 or 2, **characterised in that** the intermediate mechanism (6) is a belt transmission.

4. The mechanism according to claims 1-3, **characterised in that** the unidirectional clutch (7, 8) comprises rolling elements (13), each of which is mounted in a respective recess in the body of the clutch or directly in the intermediate mechanism (6) with a wedge-shaped edge (15) and is supported by a spring element (14).

5. The mechanism according to claims 1-4, **characterised in that** the transport mechanism (11) has a form of two releasable blocks (16) mounted on the shaft (2), wherein are mounted the rolling elements (12) and which are connected by means of set screws (17).

6. The mechanism according to claims 1-5, **characterised in that** the platform (4) is slidingly mounted on the guide (1) by means of sliding or rolling guide shoes (10).

## Patentansprüche

1. Hin- und hergehender linearer Bewegungsmechanismus eines medizinischen Gerätes, mit einem Körper (3) mit einer drinnen eingebetteten mittels einer Antriebseinheit (5) angetriebenen Drehwelle (2), sowie mit einer Führung (1) mit einer darauf montierten verschiebbaren Plattform (4), **dadurch gekennzeichnet, dass** die Drehwelle (2) eine glatte Außenoberfläche aufweist und mit einer Welle der Antriebseinheit (5) mittels eines Zwischenmechanismus (6) verbunden ist, der mindestens zwei Rücklaufsperren (7, 8) umfasst, die auf der glatten Drehwelle (2) zueinander entgegengesetzt platziert sind, und die Plattform (4) mit einem auf der Drehwelle (2) gesetzten Schubmechanismus (11) integriert ist und so positionierte Rollelemente (12) umfasst, dass die Punktkontakte von Rollelementen (12) mit der glatten Oberfläche der Welle (2) einen Helix Umriss bestimmen, wobei die Antriebseinheit (5) und der Zwischenmechanismus (6) an der Plattform (4) befestigt sind.

2. Bewegungsmechanismus nach Anspruch 1 **dadurch gekennzeichnet, dass** der Zwischenmechanismus (6) mittels eines Lagers (9) in die Plattform (4) eingebettet ist.

3. Bewegungsmechanismus nach Anspruch 1 oder 2, **dadurch gekennzeichnet, dass** der Zwischenmechanismus (6) die Form eines Riemengetriebes aufweist.

4. Bewegungsmechanismus nach den Ansprüchen 1-3, **dadurch gekennzeichnet, dass** die Rücklaufsperre (7, 8) Rollelemente (13) umfasst, von denen jedes in einer zugeordneten Aussparung im Kupplungskörper oder direkt im Zwischenmechanismus (6) mit einer keilförmigen Kante (15) eingebettet und von einem Federelement (14) unterstützt ist.

5. Bewegungsmechanismus nach den Ansprüchen 1-4, **dadurch gekennzeichnet, dass** der Schubmechanismus (11) die Form von zwei trennbaren Blöcken (16) hat, die auf der Welle (2) befestigt sind, in welche die Rollelemente (12) eingebettet und welche mittels Stellschrauben (17) verbunden sind.

6. Bewegungsmechanismus nach den Ansprüchen 1-5, **dadurch gekennzeichnet, dass** die Plattform (4) mittels verschiebbaren oder rollenden Führungselementen (10) gleitend an der Führung (1) montiert ist.

## Revendications

1. Mécanisme pour un mouvement linéaire alternatif d'un dispositif médical comprenant un corps (3), dans lequel sont montés un arbre rotatif (2) entraîné par une unité d'entraînement (5) et un guide (1) avec une plate-forme coulissante (4) montée sur celui-ci, **caractérisé en ce que** l'arbre rotatif (2) a une surface externe lisse et est relié à l'arbre de l'unité d'entraînement (5) à l'aide d'un mécanisme intermédiaire (6) comprenant au moins deux embrayages unidirectionnels (7, 8) montés sur la lisse arbre rotatif (2) dans des directions opposées, et la plate-forme (4) est intégrée à un mécanisme de transport (11) qui est monté sur l'arbre rotatif (2) et comprend des éléments roulants (12) disposés de telle manière que les points de contact dudit les éléments roulants (12) avec la surface lisse de l'arbre (2) déterminent une hélice, dans laquelle l'unité d'entraînement (5) et le mécanisme intermédiaire (6) sont montés sur la plate-forme (4).

2. Mécanisme selon la revendication 1, **caractérisé en ce que** le mécanisme intermédiaire (6) est monté sur la plate-forme (4) à l'aide d'un palier (9).

3. Mécanisme selon la revendication 1 ou 2, **caractérisé en ce que** le mécanisme intermédiaire (6) est une transmission à courroie.

4. Mécanisme selon les revendications 1 à 3, **caractérisé en ce que** l'embrayage unidirectionnel (7, 8) comprend des éléments roulants (13), dont chacun est monté dans un évidement respectif dans le corps de l'embrayage ou directement dans le mécanisme intermédiaire (6) avec un bord en forme de coin (15) et est supporté par un élément ressort (14).

5. Mécanisme selon les revendications 1 à 4, **caractérisé en ce que** le mécanisme de transport (11) a une forme de deux blocs amovibles (16) montés sur l'arbre (2), dans lesquels sont montés les éléments roulants (12) et qui sont reliés par à l'aide de vis de réglage (17).

6. Mécanisme selon les revendications 1 à 5, **caractérisé en ce que** la plate-forme (4) est montée coulissante sur le guide (1) à l'aide de patins de guidage (10) coulissants ou roulants.
